# EUROPEAN PATENT SPECIFICATION

(11) **EP 3 081 465 B1**
(45) Date of publication and mention of the grant of the patent: **12.07.2017**
(21) Application number: 15163347.6
(22) Date of filing: 13.04.2015
(51) Int. Cl.: B62H 3/08

(54) **GROUND LOCK APPARATUS**
BODENVERRIEGELUNGSVORRICHTUNG
APPAREIL DE VERROUILLAGE AU SOL

(43) Date of publication of application: 19.10.2016
(73) Proprietor: Southern Taiwan University of Science and Technology, Tainan City 71005 (TW)
(72) Inventor: Chang, Jia-Cheng, 71005 Tainan City (TW); Hsu, Hsing-Yu, 71005 Tainan City (TW); Cin, Siou-Huei, 71005 Tainan City (TW); Tseng, Ching-Yu, 71005 Tainan City (TW)
(74) Representative: dompatent von Kreisler Selting Werner - Partnerschaft von Patent- und Rechtsanwälten mbB

(56) References cited:
- JP-A- 2013 032 145
- KR-A- 20120 116 239

## Description

### BACKGROUND

### Technical Field

The invention relates to a ground lock apparatus, in particular, to a ground lock apparatus for locking a wheel of a vehicle.

### Related Art

As rapid increased quantity of motorcycles and cars due to economic development, it has brought traffic congestion and air pollution problems to the living environment. To reduce energy consumption and diminish environmental pollution, governments are eager to promote "sustainable transport" concepts. Among them, because bicycles are light, save energy, comply with environmental requirements and can be sport and fitness tools, in recent years they became green transportations vigorously promoted by government policy. It is hoped that utilization of the bicycles, which is green and causes no pollution, together with public transportation system can lower the usage of cars and motorcycles so as to save energy or reduce air pollution or contribute to other benefits.

KR 20120116239 A, which shows the preamble of claims 1 and 4, discloses a buried type bicycle rack comprising a buried case, a surface plate, an opening and closing unit, and a locking unit. The buried case is buried on the ground in a state where the top thereof is opened. A coupling flange is formed on the upper peripheral of the buried case in a same level as the ground. An insertion hole is formed on the surface plate. A bicycle wheel is inserted in the insertion hole. The surface plate is coupled to the coupling flange by screws. The opening and closing unit is inserted in the opened part of the buried case under the surface plate to open or close the insertion hole according to the insertion of the bicycle wheel. When the locking unit is pressed by the weight of the inserted bicycle wheel, a locking ring is protruded to the top of the surface plate.

JP 2013032145 A discloses an embedded bicycle storage platform, including: an embedded box body with an opened upper part, and with an upper face flush with the ground; a surface plate where an insertion hole is formed for inserting the wheels of the bicycle at the upper part of the embedded box body and an opening/closing plate with one end hinged to the insertion hole and turned is formed and fastened; an elevating/lowering means that normally supports the opening/closing plate so as to close the insertion hole on a bottom of the surface plate, and in which; when the wheels of the bicycle are placed, the opening/closing plate is lowered to open the insertion hole; and a hooking means where a hooking ring, which is fastened to the bottom of the opening/closing plate, and protruded from or withdrawn in the upper part of the surface plate by the elevating/lowering of the opening/closing, is formed.

To park the bicycles orderly in public places, generally, there are adequate bicycle parking spaces by MRT stations, bus stations, schools, offices, markets, shopping streets, libraries, hospitals, financial institutions, sport centers, parks, tourist attractions, etc. for the common people to park bicycles.

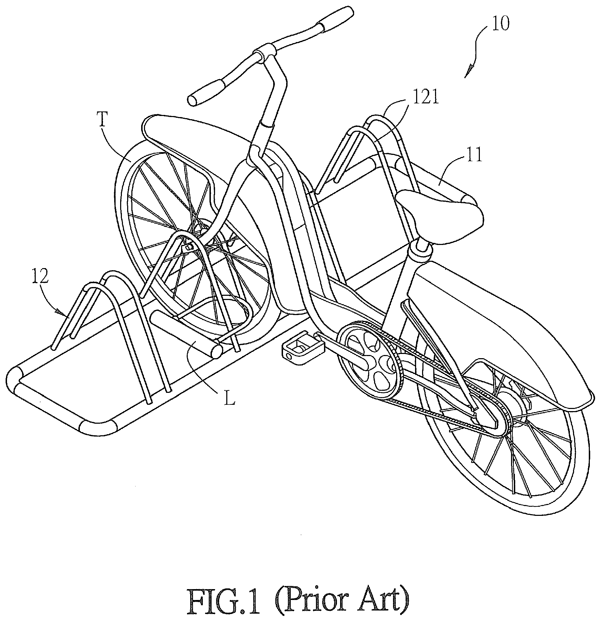

Referring to Fig. 1, the conventional parking rack 10 has a plurality of Sheffield racks 12 on a base 11, each Sheffield racks 12 has two parallel curved rods 121. When parking a bicycle, a user places the front wheel T between the two curved rods 121 of the Sheffield racks 12, and then uses his own lock L to secure one part of the bicycle to the parking rack 10 together so as to finish parking and locking.

However, because the conventional parking rack 10 requires sufficient pavements for installation, it occupies quite large space and reduces available zones for pedestrians. Furthermore, if walking incautiously on foot, a pedestrian may stumble against the parking rack 10 which protrudes from the ground thus getting hurt. In addition, it is really inconvenient that the bicycle user needs to carry his own lock to lock the bicycle on the parking rack 10.

Therefore, it is an important subject to provide a ground lock device which is convenient for the user to lock the bicycle.

### SUMMARY

An objective of the invention is to provide a ground lock apparatus which is convenient for the user to lock the bicycle.

To achieve the above objective, a ground lock apparatus according to the invention is planarly disposed on a ground for locking a wheel of a vehicle. It includes a body, a ditch cover unit and a lock unit. The body has a recess lower than the ground. The ditch cover unit is connected to the periphery of the opening of the recess. After the wheel falls into the recess, the lock unit passes through the wheel.

The ground lock apparatus further includes a detection unit detecting whether the wheel falls into the recess, wherein the ground lock apparatus further includes an alarm unit coupled to the ditch cover unit or the lock unit.

In one embodiment, the ditch cover unit further includes at least one cover sheet and at least one driving element. The cover sheet is connected to the periphery of the opening of the recess. The driving element is correspondingly connected to the cover sheet and drives the cover sheet to move.

In one embodiment, the ground lock apparatus further includes a user operation unit coupled to the ditch cover unit or the lock unit.

To achieve the above objective, a ground lock apparatus according to the invention for locking a wheel of a vehicle includes a body, a ditch cover unit and a lock unit. The body has a recess. The ditch cover unit is connected to the periphery of the opening of the recess. After the ditch cover unit is at an open state, the lock unit performs a locking action.

In one embodiment, the ground lock apparatus further includes a detection unit detecting an obstacle on the locking path for the lock unit.

In one embodiment, the body further includes a round cover. The opening of the recess is located at the round cover.

In one embodiment, the ditch cover unit further includes at least one cover sheet and at least one driving element. The cover sheet is connected to the periphery of the opening of the recess. The driving element is correspondingly connected to the cover sheet and drives the cover sheet to move.

In one embodiment, the ground lock apparatus further includes an alarm unit coupled to the ditch cover unit or the lock unit.

In one embodiment, the ground lock apparatus further includes a user operation unit coupled to the ditch cover unit or the lock unit.

As mentioned above, the ground lock apparatus according to the invention includes the body and the lock unit, and the body has the recess lower than the ground. During locking vehicle, the wheel firstly falls into the recess of the body and then the locking unit can pass through the wheel so as to lock the vehicle. It is convenient for the user of the vehicle to no longer carry lock by himself. In addition, because the ground lock apparatus is planarly disposed on the ground, the ground which the ground lock apparatus is disposed on is still substantially flat and it does not protrude from the ground when no vehicle parks. Therefore, pedestrians may walk above the ground lock apparatus and do not fear that they stumbled due to the parking rack. The walking region which pedestrians can walk on is significantly increased, and it is also beneficial to beautify the environment.

### BRIEF DESCRIPTION OF THE DRAWINGS

The embodiments will become more fully understood from the detailed description and accompanying drawings, which are given for illustration only, and thus are not limitative of the present invention, and wherein:
Fig. 1 is a schematic diagram showing the conventional parking rack;
Fig. 2A is a perspective schematic diagram showing the ground lock apparatus according to the first embodiment of the invention;
Fig. 2B and Fig. 2C are sectional schematic diagrams showing the ground lock apparatus according to the first embodiment of the invention;
Fig. 3A to Fig. 3D are schematic diagrams showing various examples of the ditch cover unit of the ground lock apparatus according to the first embodiment of the invention;
Fig. 4A and Fig. 4B are schematic diagrams showing various examples of the cooperation of the ground lock apparatus and the user operation unit according to the first embodiment of the invention;
Fig. 5A is a perspective schematic diagram showing the ground lock apparatus according to the second embodiment of the invention; and
Fig. 5B is a sectional schematic diagram showing the ground lock apparatus according to the second embodiment of the invention.

### DETAILED DESCRIPTION OF THE INVENTION

The embodiments of the invention will be apparent from the following detailed description, which proceeds with reference to the accompanying drawings, wherein the same references relate to the same elements.

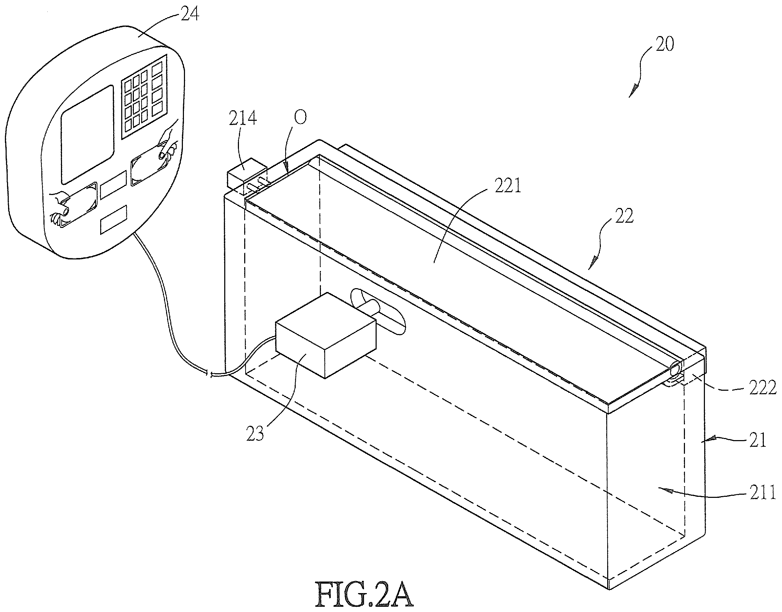

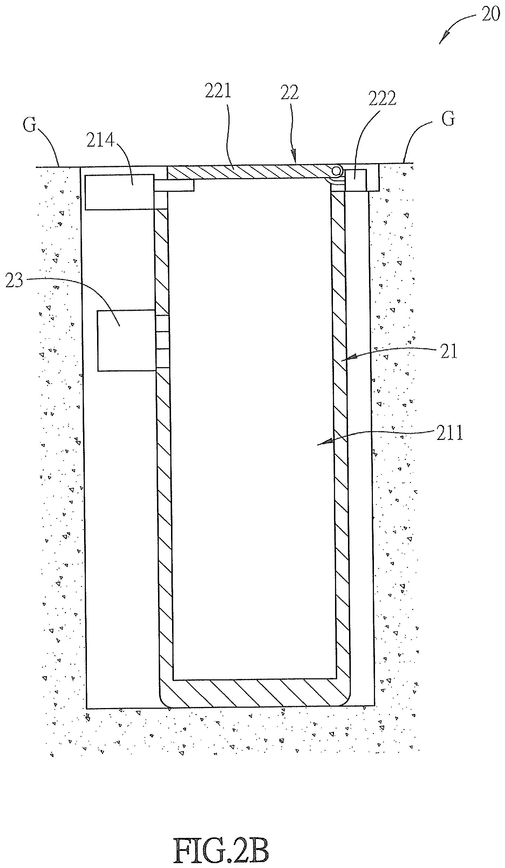

Fig. 2A to Fig. 2C are schematic diagrams showing the ground lock apparatus according to the first embodiment of the invention. Referring to Fig. 2A to Fig. 2C, the ground lock apparatus 20 includes a body 21, a ditch cover unit 22 and a lock unit 23. The ground lock apparatus 20 is planarly disposed on a ground G for locking a wheel W of a vehicle. The ground lock apparatus 20 is embedded into the ground G, and for example, a round hole is dug and then the ground lock apparatus 20 is disposed in the hole so that the upper surface of the ground lock apparatus 20 and the ground G are substantially contour and thus the ground lock apparatus does not protrude from the ground and hinder pedestrians. Alternatively, the ground G can refer to general roadway or pavement, the surface for disposing the ground lock apparatus 20, or the surface on which a user of the ground lock apparatus 20 stands during securing. In addition, the vehicle is a vehicle having the wheel W, and the quantity of the wheel W is at least one. For example, it may be unicycle, bicycle, motorcycle, pedicab, electric vehicle, or carts, etc. The following embodiments take one wheel W of the bicycle to be secured for example.

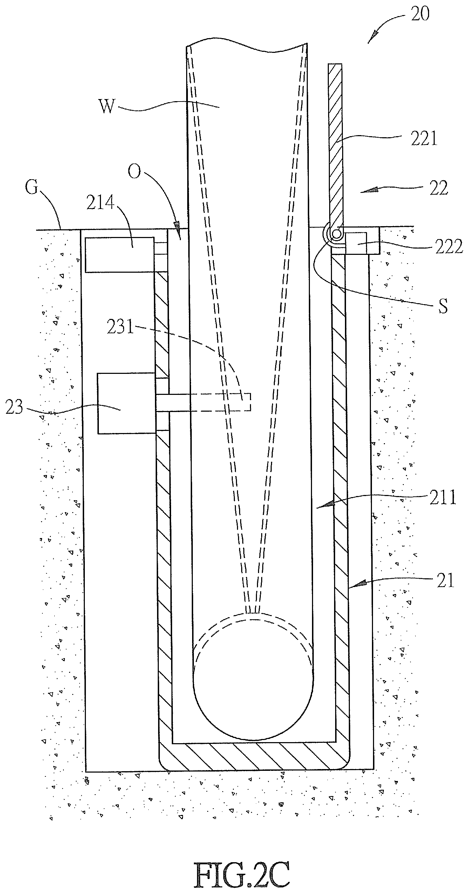

The body 21 has a recess 211 lower than the ground G, and it can be an accommodation space for the wheel W during falling and securing. It is noted that the depth of the recess 211 is required to be larger than or equal to the distance between the outer diameter of the wheel W and the void portion of the rim. In the embodiment, the body 21 is a rectangle case for example. The opening O of the recess 211 is a form of an elongated shape opening O (herein is a rectangle for example), and it is the place which the wheel W falls into (as shown in Fig. 2C). Herein, the shape of the recess 211 substantially matches up with the required space which the wheel W falls into. Furthermore, the body 21 may have other shapes, it is not specially limited thereto.

The ditch cover unit 22 is connected to the periphery of the opening O of the recess 211. The ditch cover unit 22 further includes at least one cover sheet 221 and at least one driving element 222. In Fig. 2A the quantity of the cover sheet 221 is one for example. The cover sheet 221 is connected to and pivot on the periphery of one long side of the opening O of the recess 211. The cover sheet 221 may be connected to the periphery of the opening O by a pivot. A restoring force resulting from a torsion of the pivot may apply to the cover sheet 221 so as to restore a close position that the cover sheet 221 covers the recess 211. The shape of the cover sheet 221 substantially matches up with the shape of the opening O, and it covers the opening O. The periphery of the opening O has at least one support section 214 (for example an electronic lock) to support the cover sheet 221. When the cover sheet 221 covers the recess 211, the support section 214 protrudes from the opening O of the recess 211 to support the cover sheet 221 being covering the opening O. When the cover sheet 221 is at open state, the support section 214 retracts to avoid blocking the wheel W. The support section 214 may be an electronic lock for example. It is noted that the upper surface of the cover sheet 221 of the ditch cover unit 22 is also one portion of the upper surface of the ground lock apparatus 20, and thus the upper surface of the cover sheet 221 and the ground G are substantially equally flat. The driving element 222 is correspondingly connected to the cover sheet 221 and drives the cover sheet 221 to move. For example, the driving element 222 is a combination of a motor and gears, etc. to drive the cover sheet 221 to move. The motion of the driven cover sheet 221 includes translation or rotation. For example here, the cover sheet 221 is driven by rotating upwards to open the cover sheet 221.

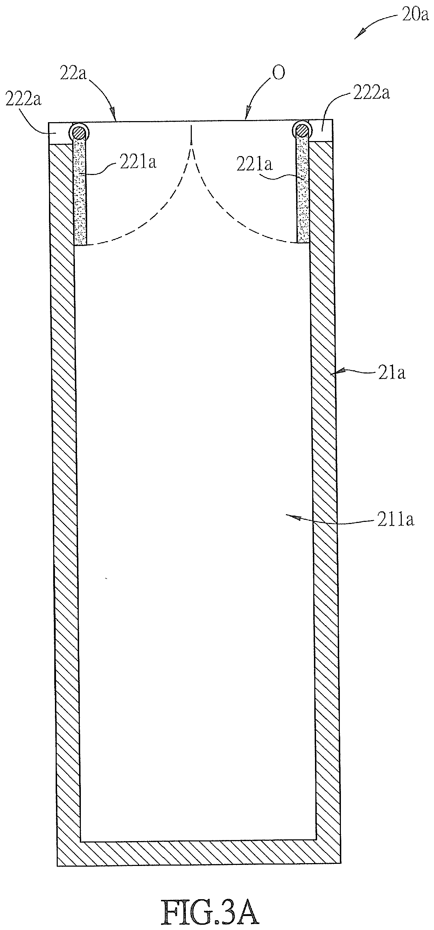

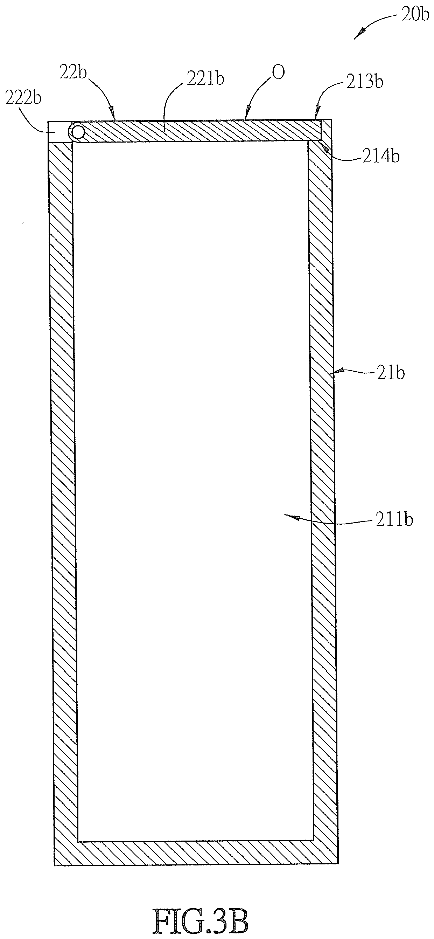

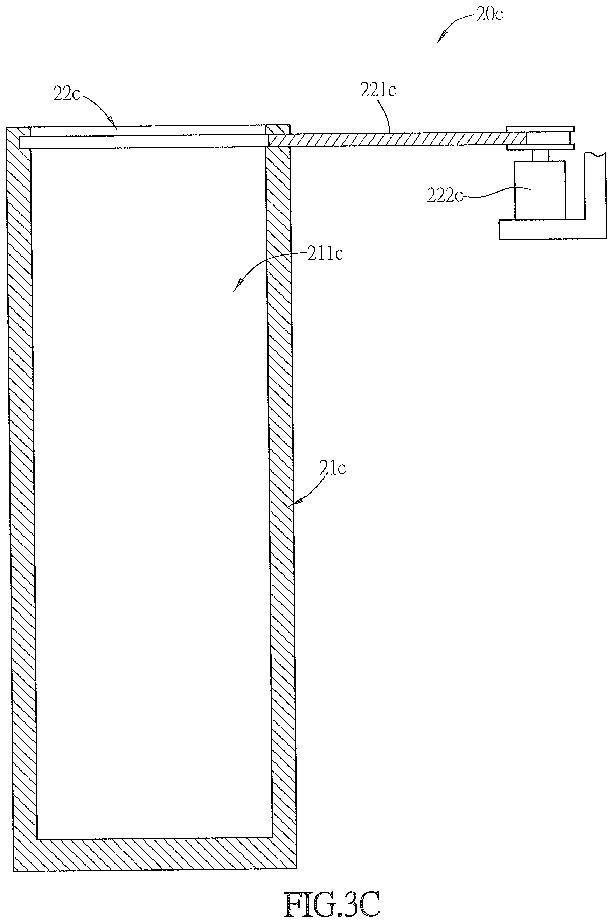

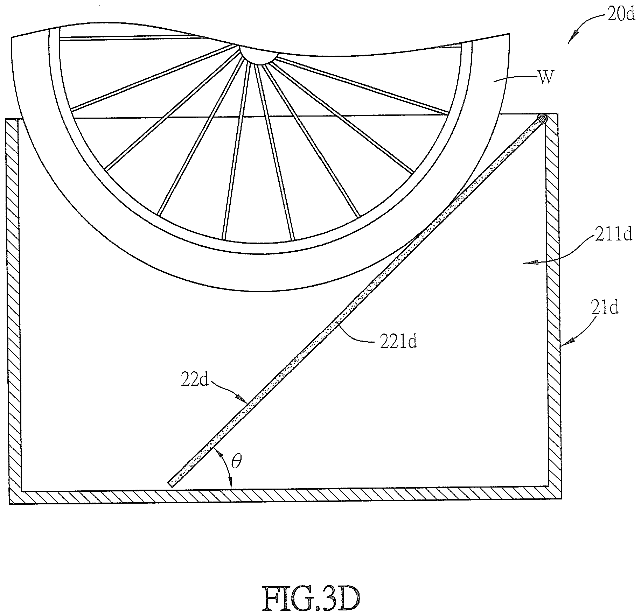

The cooperation or connection of the cover sheet and the periphery of the opening may be varied as other examples. To simplify the explanation in the following description, the figure only shows the body and the ditch cover unit. Referring to Fig. 3A, it illustrates two cover sheets 221a connected to the periphery of the opening. The cover sheets 221 a each pivots on the periphery of the opening by a pivot. The driving element 222a turns the cover sheets 221a downwards to expose the recess 211a. Referring to Fig. 3B, it illustrates that when one cover sheet 221b covers the opening O, it is supported by a support section 214b (for example a notch) located at the periphery of the opening. Referring to Fig. 3C, it illustrates that the cover sheet 221 c is driven by the driving element 222c, and it moves by horizontal translation parallel to the roadway or pavement to open or close the recess 211 c. Herein, the driving element 222c has a motor, gears, a rack and pinion, etc. They are driven by the motor to drive the cover sheet 221c to move horizontally. Referring to Fig. 3D, it illustrates that the cover sheet 221d pivots on the short side of the body 21d. When the support element 223d retracts and presses downwards due to the weight of the wheel W, one end of the cover sheet 221d falls down and then contacts the body 21d, and it and the bottom surface of the body 21d form an included angle θ. Therefore, when falling into the recess 211d, the wheel W rests on the cover sheet 221d so that the wheel W will not directly fall into the bottom surface of the body 21d. During rain, it is beneficial for the wheel W to avoid rust due to gathered water.

Referring to Fig. 2A to Fig. 2C, the lock unit 23 is disposed on one lateral surface of the body 21 for example. It may also be fixed to the lateral surface or the bottom surface of the hole wall of the dug hole which ground lock apparatus 20 is installed on. The lock unit 23 may be a lock cylinder, a lock plate, or an electronic lock (for example an electric drop bolt). Herein, the lock unit 23 is illustrated as an electric drop bolt which is able to stretch based on electric control, namely, it receives driving signal to protrude or retract. The body 21 has a through hole located at its portion corresponding to the lock unit 23, so that the protruded lock portion 231 of the lock unit 23 is able to pass through the body 21 and then reach the recess 211. Alternatively, if the body 21 itself has sidewalls of hollow structure, the lock portion 231 can directly pass through.

In the embodiment, the ground lock apparatus 20 further includes a user operation unit 24 coupled to the ditch cover unit 22 or the lock unit 23. The coupling may be implemented by signals to drive and control through wire or wireless. Herein, the user operation unit 24 is coupled to the ditch cover unit 22 and the lock unit 23 to drive and control the ditch cover unit 22 and the lock unit 23. The user may control the driving element 222 by manual operation or the interface of the user operation unit 24 to drive the cover sheet 221 to be open or closed. On a condition that the ground lock apparatus 20 is bought for personal use, the user operation unit 24 may be simply configured to control the driving element 222 to drive or not. The user may use identification element to identify his identity by the user operation unit 24 so as to open the cover sheet 221, or he may input password directly on the user operation unit 24 to open the cover sheet 221. Following description takes the cooperation of the ground lock apparatus 20 and the rental system of public bicycle for example to illustrate the operation of the ground lock apparatus 20. However, the service of the rental system of public bicycle is not the main feature of the invention, it is illustrated for example here but not limited to the application of the invention.

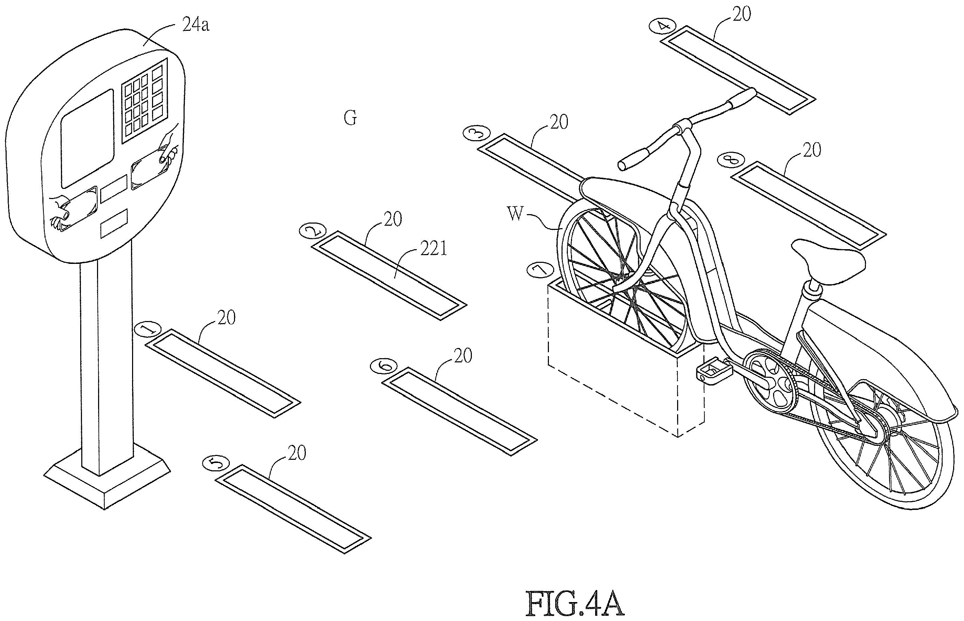

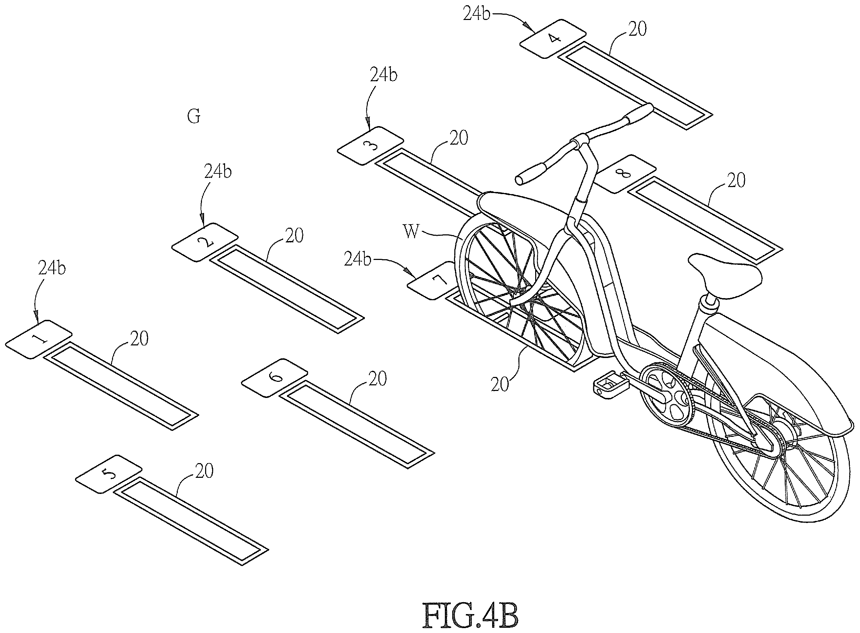

Referring to Fig. 2A to Fig. 2C, Fig. 4A and Fig. 4B, the rental system of public bicycle cooperates with a plurality of rental stations, each rental station is provided with a plurality of bicycles, and each bicycle can be provided with a bicycle identification element to record its belonged rental station number, lock number, use time, or identification code, etc. Fig. 4A and Fig. 4B are schematic diagrams showing that a rental station includes a plurality of bicycles and a plurality of ground lock apparatuses. The rental system of public bicycle may include a remote management server, a plurality of central control unit installed on each rental station, and a plurality of the operation units 24 electrically connected to each corresponding central control unit. A bicycle user only needs to buy a prepaid card (not shown) which records a built-in card number, user identity information and prepaid amount. When the user give the rent bicycle back, he only needs to take his prepaid card and let it sensed closely by the user operation unit 24 of the ground lock apparatus 20 which corresponds to the bicycle. After successful identification, the user operation unit 24 accordingly drives the driving element 222 to open cover sheet 221, and the support element 214 retracts to avoid blocking the wheel W. Referring to Fig. 4A, it illustrates that one user operation unit 24 is disposed around a plurality of the ground lock apparatuses 20, namely, one user operation unit 24 can control a plurality of the ground lock apparatuses 20. Referring to Fig. 4B, it illustrates that one user operation unit 24 is disposed by each ground lock apparatus 20 in one-to-one control for example. In addition, the user operation unit 24 is also planarly disposed on the ground, and only the interface of the user operation unit 24 is exposed from the ground G for the user to operate. From Fig. 4A and Fig. 4B, the ground lock apparatus 20 only exposes the cover sheet 221 from the ground G. The ground lock apparatuses 20 can be disposed very closely, even that the interval between the adjacent ground lock apparatuses 20 can be smaller than the length of the ground lock apparatus. Furthermore, the ground lock apparatuses 20 can be arranged with stagger, and thus requiring relatively little space.

When the user parks the bicycle to secure, the cover sheet 221 is accordingly driven and thus the ditch cover unit 22 is at an open state (Fig. 2C) after the identification by the user operation unit 24 is correct. A stop element S which is disposed in the driving element 222 stops the cover sheet 221 to cover the opening O of the recess 211. Then the lock unit 23 can be driven according to the user operation unit 24 (for example, after finishing identification quite a time period, the lock unit 23 begins to secure) or be operated manually by the user, so as to protrude the lock portion 231 of the lock unit 23 to pass through the wheel W for limiting the movement of the wheel W.

In addition, when the user wants to unlock the bicycle, the user operation unit 24 accordingly drives the lock unit 23 to unlock on the condition that the identification by the user operation unit 24 is correct. After the protruded lock portion 231 of the lock unit 23 retracts, the user can pull the wheel W of the bicycle from the recess 211. Accordingly, the user can take the bicycle out and use it.

As to the previous mentioned locking action, it is quite convenient for the bicycle user because he no longer needs to carry an extra lock by himself. In addition, because the ground lock apparatus 20 is planarly disposed on the ground G, the ground G which the ground lock apparatus 20 is disposed on is still flat and it substantially does not protrude from the ground G when no bicycle parks. Therefore, pedestrians may walk above the ground lock apparatus and do not fear that they stumbled due to the parking rack. The walking region which pedestrians can walk on is significantly increased, and it is beneficial to beautify the environment.

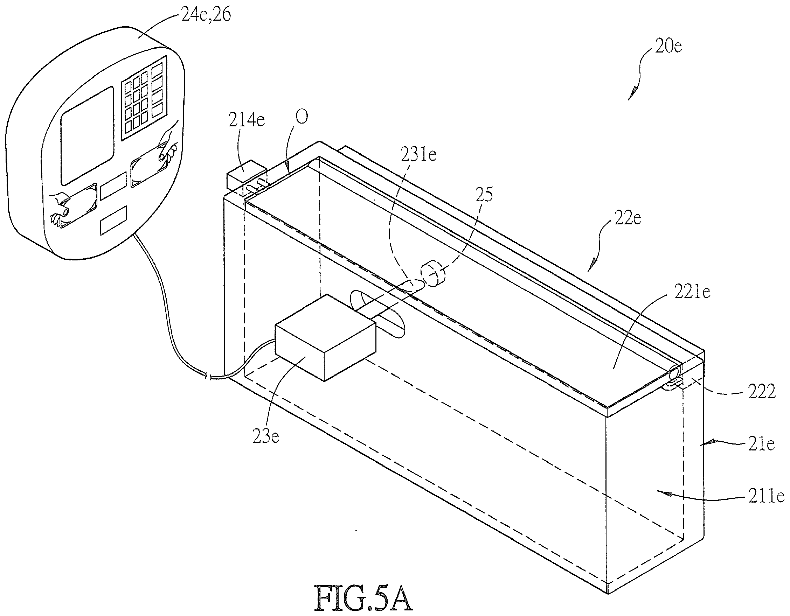

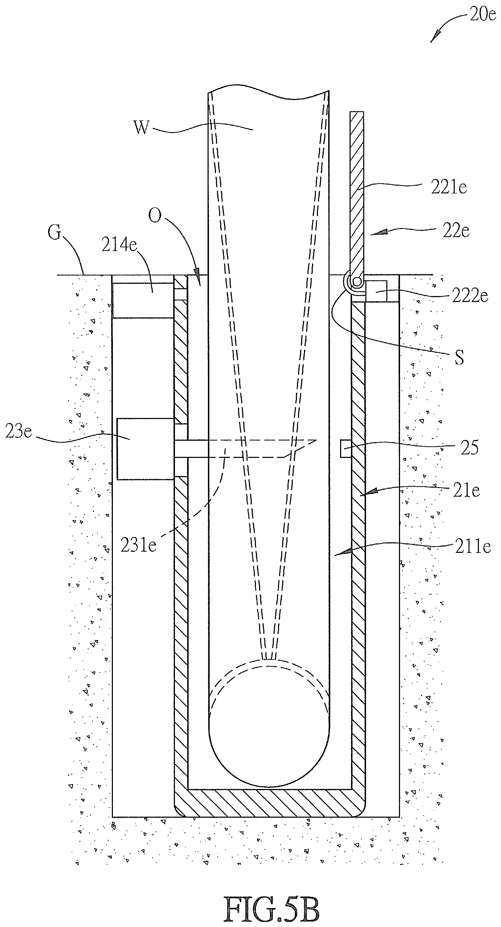

Then, referring to Fig. 5A and Fig. 5B to illustrate the ground lock apparatus of the second embodiment of the invention, the ground lock apparatus 20e includes a body 21e, a ditch cover unit 22e and a lock unit 23e. The difference from the previous embodiment is that the ground lock apparatus 20e in the embodiment further includes a detection unit 25. The detection unit 25 may be disposed on the body 21e, for example, the inner wall of the body 21e. The detection unit 25 may detect whether the wheel W falls into the recess 211e, or it may detect whether an obstacle is on the path that the lock portion 231e of the lock unit 23e protrudes along, for example, the obstacle of the rim of the wheel W or other objects falling into the recess 211e. In order to detect the obstacle on the path that the lock portion 231e of the lock unit 23e protrudes along, the detector of the detection unit 25 may be disposed on the path that the lock portion 231e protrudes along and disposed opposite to the lock unit 23e. After detection, when the wheel W has fallen into the recess 211e or there is no obstacle on the path that the lock portion 231e of the lock unit 23e protrudes along, the lock unit 23e accordingly begins to perform a locking action.

In the embodiment, the ground lock apparatus 20e further includes an alarm unit 26 which is coupled to the detection unit 25 and can be integrated with the user operation unit 24e. After the detection by the detection unit 25 indicates that the wheel W has not fallen into the recess 211 e yet or there is an obstacle on the path that the lock portion 231e of the lock unit 23e protrudes along, the alarm unit 26 warns the user by sound, light or vibration, and the user operation unit 24e may also show the related warning content or text on the operation interface to warn the user. Thus, the user may accordingly hasten to put the wheel W into the recess 211e or remove the obstacle on the path that the lock portion 231e protrudes along. Therefore, the ground lock apparatus 20e is more safety and convenient than ever.

It is noted that the lock unit 23e of the ground lock apparatus 20e may be an electronic lock, for example, an electric drop bolt. It may be operated manually by the user or driven by the user operation unit 24e to secure. The front end of the lock portion 231e has a lead angle (for example an oblique angle) thus gliding over the obstacle and passing through the wheel W instead of jamming the rim or spokes.

It is noted that the body 21e, the ditch cover unit 22e, the lock unit 23a, the detection unit 25 and the alarm unit 26 of the ground lock apparatus 20e in the embodiment may be cooperated with the ground lock apparatus in the first embodiment, and they are not limited thereto here.

Another ground lock apparatus according to the invention for locking a wheel of a vehicle is also disclosed. The ground lock apparatus includes a body, a ditch cover unit and a lock unit. The body has a recess. The ditch cover unit is connected to the periphery of the opening of the recess. After the ditch cover unit is at an open state, the lock unit performs a locking action. Because the technique features and related connection relationships of the body, the ditch cover unit and the lock unit have been illustrated and explained in the previous embodiments, and thus they are not repeated here again.

It is noted that, in addition, various examples of each element, each component or each unit in all embodiments can be alternatively utilized in each embodiments, and they are not limited to the examples as mentioned in the above embodiments.

As mentioned above, the ground lock apparatus according to the invention includes the body and the lock unit, and the body has the recess lower than the ground. During locking vehicle, the wheel firstly falls into the recess of the body and then the locking unit can pass through the wheel so as to lock the vehicle. It is convenient for the user of the vehicle to no longer carry lock by himself. In addition, because the ground lock apparatus is planarly disposed on the ground, the ground which the ground lock apparatus is disposed on is still substantially flat and it does not protrude from the ground when no vehicle parks. Therefore, pedestrians may walk above the ground lock apparatus and do not fear that they stumbled due to the parking rack. The walking region which pedestrians can walk on is significantly increased, and it is also beneficial to beautify the environment.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. A ground lock apparatus (20,20e), planarly disposed on a ground for locking a wheel of a vehicle, comprising:
a body (21,21 d,21 e), having a recess (211,211a,211c,211d,211e) lower than the ground;
a ditch cover unit (22,22e), connected to the periphery of the opening of the recess (211,211a,211c,211d,211e); and
a lock unit (23, 23a, 23e), wherein after the wheel falls into the recess (211,211a,211c,211d,211e), the lock unit (23, 23a, 23e) passes through the wheel, **characterized in that** a detection unit, detecting whether the wheel falls into the recess (211,211 a,211 c,211 d,211 e), and an alarm unit (26), coupled to the detection unit (25), are provided.

2. The ground lock apparatus (20,20e) of claim 1, wherein the ditch cover unit (221e) further comprises at least one cover sheet (221e) and at least one driving element (222), the cover sheet (221e) is connected to the periphery of the opening of the recess (221e) and the driving element (222) is correspondingly connected to the cover sheet (221e) and drives the cover sheet (221e) to move.

3. The ground lock apparatus (20,20e) of claim 1, further comprising:
a user operation unit (24,24e), coupled to the ditch cover unit (22,22e) or the lock unit.

4. A ground lock apparatus (20,20e), for locking a wheel of a vehicle, comprising:
a body (21,21 d,21 e), having a recess (211,211a,211c,211d,211e);
a ditch cover unit (22,22e), connected to the periphery of the opening of the recess (211,211 a,211 c,211 d,211e); and
a lock unit, wherein after the ditch cover unit (22,22e) is at an open state, the lock unit (23, 23a, 23e) performs a locking action, **characterized by** a detection unit (25), detecting an obstacle on the locking path for the lock unit (23,23a, 23e),
an alarm unit (26) being coupled to the detection unit (25).

5. The ground lock apparatus (20e) of claim 4, wherein the ditch cover unit (22e), further comprises at least one cover sheet (221e) and at least one driving element (222), the cover sheet (221e) is connected to the periphery of the opening of the recess (211e), and the driving element (222) is correspondingly connected to the cover sheet (221e) and drives the cover sheet (221e) to move.

6. The ground lock apparatus (20,20e) of claim 4, further comprising:
a user operation unit (24,24e), coupled to the ditch cover unit (22,22e) or the lock unit (23,23a,23e).

## Patentansprüche

1. Bodenverriegelungsvorrichtung (20, 20e), die zum Verriegeln eines Rades eines Fahrzeugs planar auf einem Boden angeordnet ist, mit:
einem Körper (21, 21d, 21e) mit einer Ausnehmung (211, 211a, 211c, 211d, 211e), die tiefer als der Boden ist;
einer Vertiefungsabdeckungseinheit (22, 22e), die mit dem Umfangsrand der Öffnung der Ausnehmung (211, 211a, 211c, 211d, 211e) verbunden ist; und
einer Verriegelungseinheit (23, 23a, 23e), wobei sich die Verriegelungseinheit (23, 23a, 23e) durch das Rad erstreckt, nachdem das Rad in die Ausnehmung (211, 211a, 211c, 211d, 211e) gefallen ist,
**dadurch gekennzeichnet, dass**
eine Erkennungseinheit, welche erkennt, ob das Rad in die Ausnehmung (211, 211a, 211c, 211d, 211e) fällt,
und eine mit der Erkennungseinheit (25) gekoppelte Alarmeinheit (26) vorgesehen sind.

2. Bodenverriegelungsvorrichtung (20, 20e) nach Anspruch 1, bei welcher die Vertiefungsabdeckungseinheit (221e) ferner mindestens eine Abdeckungsplatte (221e) und mindestens ein Antriebselement (222) aufweist, wobei die Abdeckungsplatte (221e) mit dem Umfangsrand der Öffnung der Ausnehmung (222e) verbunden ist, und das Antriebselement (222) entsprechend mit der Abdeckungsplatte (221e) verbunden ist und die Abdeckungsplatte (221e) zur Bewegung antreibt.

3. Bodenverriegelungsvorrichtung (20, 20e) nach Anspruch 1, ferner mit:
einer Benutzer-Betätigungseinheit (24, 24e), die mit der Vertiefungsabdeckungseinheit (22, 22e) oder der Verriegelungseinheit gekoppelt ist.

4. Bodenverriegelungsvorrichtung (20, 20e) zum Verriegeln eines Rades eines Fahrzeugs, mit:
einem Körper (21, 21d, 21e) mit einer Ausnehmung (211, 211a, 211c, 211d, 211e);
einer Vertiefungsabdeckungseinheit (22, 22e), die mit dem Umfangsrand der Öffnung der Ausnehmung (211, 211a, 211c, 211d, 211e) verbunden ist; und
einer Verriegelungseinheit, wobei die Verriegelungseinheit (23, 23a, 23e) einen Verriegelungsvorgang durchführt, nachdem die Vertiefungsabdeckungseinheit (22, 22e) sich in einem offenen Zustand befindet,
**gekennzeichnet durch**
eine Erkennungseinheit (25), die ein Hindernis im Verriegelungsweg der Verriegelungseinheit (23, 23a, 23e) erkennt,
eine mit der Erkennungseinheit (25) gekoppelte Alarmeinheit (26).

5. Bodenverriegelungsvorrichtung (20e) nach Anspruch 4, bei welcher die Vertiefungsabdeckungseinheit (22e) ferner mindestens eine Abdeckungsplatte (221e) und mindestens ein Antriebselement (222) aufweist, wobei die Abdeckungsplatte (221e) mit dem Umfangsrand der Öffnung der Ausnehmung (211e) verbunden ist, und das Antriebselement (222) entsprechend mit der Abdeckungsplatte (221e) verbunden ist und die Abdeckungsplatte (221e) zur Bewegung antreibt.

6. Bodenverriegelungsvorrichtung (20, 20e) nach Anspruch 4, ferner mit:
einer Benutzer-Betätigungseinheit (24, 24e), die mit der Vertiefungsabdeckungseinheit (22, 22e) oder der Verriegelungseinheit (23, 23a, 23e) gekoppelt ist.

## Revendications

1. Appareil de verrouillage au sol (20, 20e), disposé de façon plane sur un sol pour verrouiller une roue d'un véhicule, comprenant :
un corps (21, 21d, 21e), comportant un évidement (211, 211a, 211c, 211d, 211e) plus bas que le sol ;
une unité de couverture de fossé (22, 22e), reliée à la périphérie de l'ouverture de l'évidement (211, 211a, 211c, 211d, 211e) ; et
une unité de verrouillage (23, 23a, 23e), dans lequel, après que la roue tombe dans l'évidement (211, 211a, 211c, 211d, 211e), l'unité de verrouillage (23, 23a, 23e) traverse la roue, **caractérisé en ce que**
une unité de détection, détectant si la roue tombe dans l'évidement (211, 211a, 211c, 211d, 211e), et une unité d'alarme (26), couplée à l'unité de détection (25), sont prévues.

2. Appareil de verrouillage au sol (20, 20e) selon la revendication 1, dans lequel l'unité de couverture de fossé (221e) comprend en outre au moins une feuille de couverture (221e) et au moins un élément d'entraînement (222), la feuille de couverture (221e) est reliée à la périphérie de l'ouverture de l'évidement (222e) et l'élément d'entraînement (222) est relié de façon correspondante à la feuille de couverture (221e) et entraîne le déplacement de la feuille de couverture (221e).

3. Appareil de verrouillage au sol (20, 20e) selon la revendication 1, comprenant en outre :
une unité de fonctionnement par l'utilisateur (24, 24e), couplée à l'unité de couverture de fossé (22, 22e) ou à l'unité de verrouillage.

4. Appareil de verrouillage au sol (20, 20e), pour verrouiller une roue d'un véhicule, comprenant :
un corps (21, 21d, 21e), comportant un évidement (211, 211a, 211c, 211d, 211e) ;
une unité de couverture de fossé (22, 22e), reliée à la périphérie de l'ouverture de l'évidement (211, 211a, 211c, 211d, 211e) ; et
une unité de verrouillage, dans lequel, après que l'unité de couverture de fossé (22, 22e) est à l'état ouvert, l'unité de verrouillage (23, 23a, 23e) réalise une action de verrouillage, **caractérisé par**
une unité de détection (25), détectant un obstacle sur le chemin de verrouillage pour l'unité de verrouillage (23, 23a, 23e),
une unité d'alarme (26) qui est couplée à l'unité de détection (25).

5. Appareil de verrouillage au sol (20e) selon la revendication 4, dans lequel l'unité de couverture de fossé (22e) comprend en outre au moins une feuille de couverture (221e) et au moins un élément d'entraînement (222), la feuille de couverture (221e) est reliée à la périphérie de l'ouverture de l'évidement (211e), et l'élément d'entraînement (222) est relié de façon correspondante à la feuille de couverture (221e) et entraîne le déplacement de la feuille de couverture (221e).

6. Appareil de verrouillage au sol (20, 20e) selon la revendication 4, comprenant en outre :
une unité de fonctionnement par l'utilisateur (24, 24e), couplée à l'unité de couverture de fossé (22, 22e) ou à l'unité de verrouillage (23, 23a, 23e).
